Europäisches Patentamt

European Patent Office

Office européen des brevets

(11) Publication number: **0 542 259 A1**

# EUROPEAN PATENT APPLICATION

(21) Application number: **92119361.1**

(22) Date of filing: **12.11.92**

(51) Int. Cl.5: **H04N 5/44**

(30) Priority: **14.11.91 JP 299071/91**

(43) Date of publication of application:
**19.05.93 Bulletin 93/20**

(84) Designated Contracting States:
**DE GB**

(71) Applicant: **HITACHI, LTD.**
**6, Kanda Surugadai 4− chome**
**Chiyoda− ku, Tokyo 100(JP)**
Applicant: **HITACHI DENSHI KABUSHIKI**
**KAISHA**
**2− 23− 2,Kandasuda− cho**
**Chiyoda− ku Tokyo 101(JP)**
Applicant: **HITACHI Koganei Denshi Kabushiki**
**Kaisha**
**393,Megurita− cho, Koganei− shi**
**Tokyo 187(JP)**

(72) Inventor: **Kudo, Koji**
**301 Koupo− uisutaria, 2− 3− 9,Myoujin− cho,**
**Hachiouji− shi, Tokyo 192(JP)**
Inventor: **Oki, Yasuo**
**2− 20− 12, Aoba− cho,**
**Higashimurayama− shi,**
**Tokyo 189(JP)**
Inventor: **Achiha, Masahiko**
**7− 9− 16, Azuma− cho, Iruma− shi,**
**Saitama− ken 358(JP)**

(74) Representative: **Altenburg, Udo, Dipl.− Phys.**
**et al**
**Patent− und Rechtsanwälte**
**Bardehle− Pagenberg− Dost− Altenburg− F−**
**rohwitter & Partner Postfach 86 06 20**
**W− 8000 München 86 (DE)**

(54) **Video signal processing circuit and method thereof.**

(57) The present invention provides signal processing of a television receiver, particularly a field rate up conversion processing circuit to reduce field flicker.

Interlaced video signals are converted into pro− gressive signals by a progressive scanning conver− sion circuit (41−1) and stored dividing in two field memories (7, 8). In the field memory (7), time com− pression is carried out and signals are outputted in twice of the input scanning speed, and in a signal controller (9), each field memory output is changed in prescribed timing thereby field rate up processing is made.

Signals are converted into progressive scanning signals, and the field number is made twice by reading control, thereby the apparatus is simplified and degradation of the picture quality is prevented.

FIG. 1

## Background of the Invention

### (1) Field of the Invention

The present invention relates to a video signal processing circuit and method thereof, and more specifically relates to such circuit and method where interlaced scanning video signals such as PAL (Phase Alternate by Line) television signal, NTSC (National Television System Committee) television signal are converted into video signals with field rate up.

### (2) Description of the Prior Art

In a television receiver, in order to form a picture plane of one frame, display is carried out dividing in 2 fields by interlaced scanning of the 2 : 1 (meaning of 2 fields to one frame) picture plane.

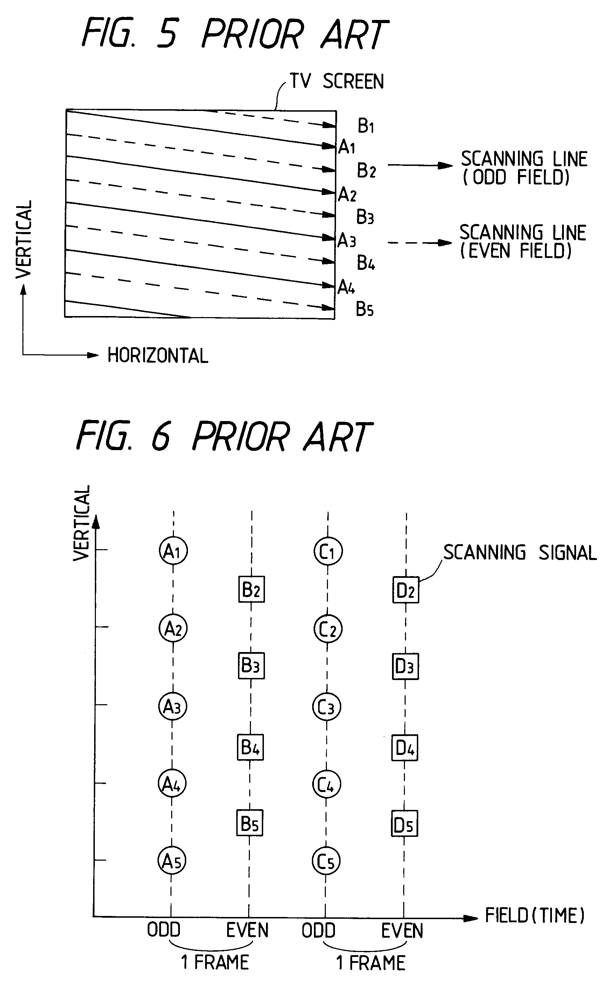

Fig. 5 indicates principle of interlaced scanning. In Fig. 5, abscissa and ordinate represent the horizontal direction and the vertical direction of the television picture plane respectively. First, in the odd field, the scanning is carried out in the order of A1→A2→A3→A4→ as in solid line, and next, in the even field, the scanning is carried out in the order of B1→B2→B3→B4→B5→ as in broken line so that space between the preceding field scanning is filled.

Fig. 6 indicates the vertical space position of scanning signals in each field when the field period (time) is taken in abscissa, and the scanning signals are in relation of offset each other in the odd field and the even field as in Fig. 6.

The PAL television transmission system is interlace of 2 : 1 and is specified in the scanning line number of 625 and the field frequency of 50 Hz. On the other hand, the NTSC television transmission system is the same interlace as that of the PLA and is specified in the scanning line of 525 and the field frequency of 60 Hz. Comparing both television transmission systems, since PAL has the field frequency less than that of NTSC by only 10 Hz, large−area flicker of the field is significant in the image to be reproduced.

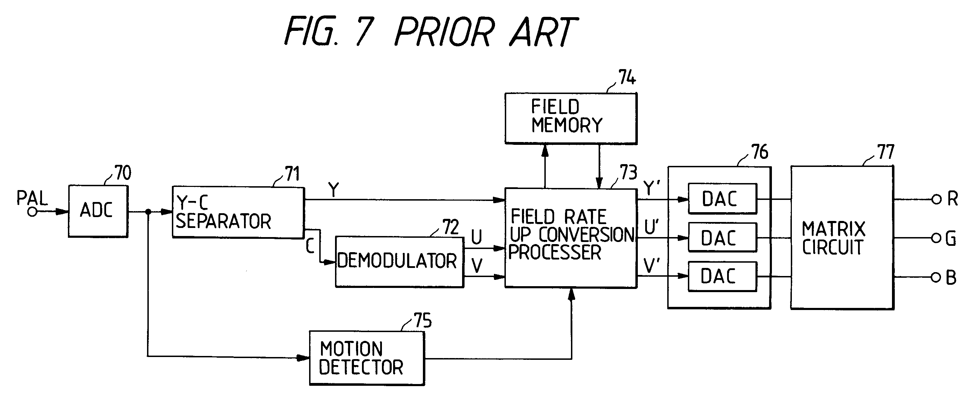

As technique to reduce flicker, a circuit constitution as shown in Fig. 7 is usually adopted, and field rate up conversion processing is proposed in that interpolation video signals are produced from original video signals and converted into video signals with the double field number.

In Fig. 7, composite video signals of television signals are converted into digital signals by an AD converter 70. The digitized composite video signals are inputted in a YC separator 71 and separated into luminance signals (Y) and chrominance signals (C). Among them, the C signals are further inputted to a demodulator 72 and demodulated into color difference signals (u, v) of the base band. Next, the separated luminance signals (Y) and the demodulated color difference signals (u, v) are inputted in a field rate up conversion processor 73. Respective input signals are written in a field memory 74 and also read out of the field memory 74 at rate of two times of that at the writing state, thereby field rate up conversion signals Y', u', v' are obtained.

Here, since the field rate up conversion processings are different in still picture and motion picture, motion information is obtained by a motion detector 75 and the signal processings are changed in the still picture and the motion picture. And then, Y' signals, u' signals and v' signals being rate up are again returned to analog signals and inputted to a matrix circuit 77, and prescribed operation is carried out and output signals of red (R), green (G), blue (B) are obtained. Of course, attendant on the rate up of video signals, the horizontal and vertical synchronous signals also are doubled respectively.

The above−mentioned field rate up conversion processing known conventionally is a processing where an imaginary field is provided between fields of the inputted video signals and the field number is increased two times, and if the imaginary field image added here is not suitable, the picture quality is degraded. Consequently, preparation of the imaginary field image becomes important in the field rate up conversion processing. Technique relating to the field rate up conversion processing is disclosed in reference "SMPTE, Journal, Vol. 92, No. 5 (May 1983), pp. 552−561".

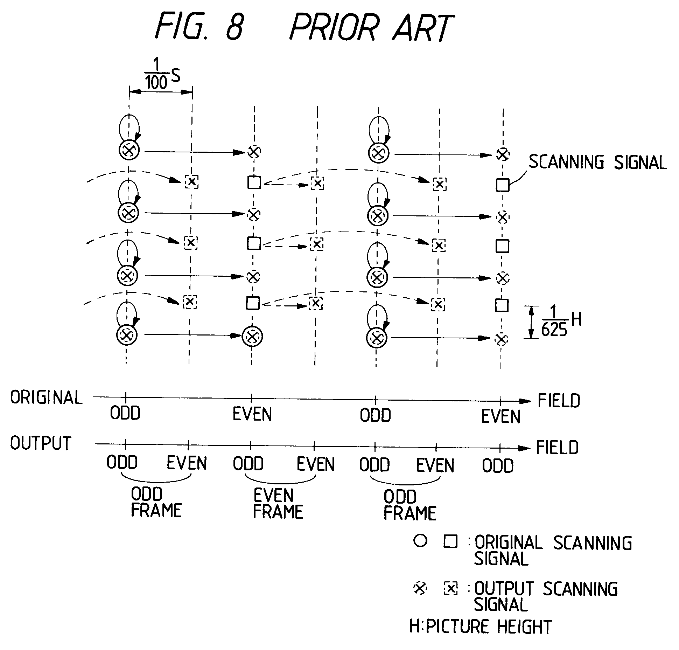

The field rate up conversion processing disclosed in the reference is different in the processing algorithm depending on whether the image is still picture or motion picture. Fig. 8 indicates the algorithm of the field rate up conversion processing in the still picture. In Fig. 8, the odd field signals (circular symbol of solid line) of the input scanning signals become odd field signals of each output frame as shown in arrow of solid line. Also the even field signals (rectangular symbol of solid line) of the input scanning signals become even field signals of each output frame as shown in arrow of broken line. In order to make such output form, the input signal is once stored in a field memory, and the same signal is outputted two times from the field memory. That is, a signal is once outputted from the field memory, and after further prescribed time, the same signal is outputted again. Where the signal speed outputted from the field memory is twice of the input signal scanning speed.

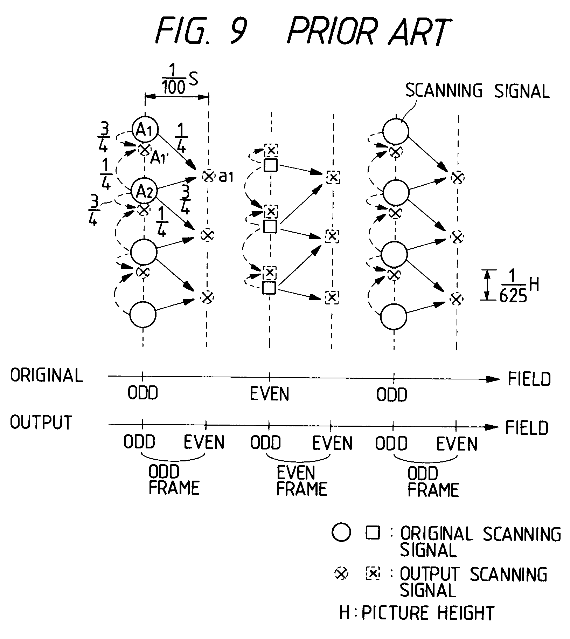

On the other hand, if the rate up conversion processing algorithm of the still picture is applied to the motion picture, a reversal phenomenon of the output field (time axis) occurs. Therefore, in the case of the motion picture, as shown in Fig. 9, signals of odd and even fields of the odd frame outputs of the output scanning signals are generated from the odd field signals of the input scanning signals, and signals of odd and even fields of the even frame outputs of the output scanning signals are generated from the even field signals of the input scanning signals. In this case, in order to generate the output scanning signals of two interlaced fields from one input field signal, as shown in Fig. 9, the two continuous scanning signals are respectively provided with weighting of 3 : 1 and are synthesized. For example, the output scanning signal A1' is generated according to equation (1), and the output scanning signal a1 is generated according to equation (2).

$$A1' = (3 \cdot A1 + A2)/4 \qquad (1)$$

$$a1 = (A1 + 3 \cdot A2)/4 \qquad (2)$$

The above‑mentioned conventional field rate up conversion processing for the motion picture cannot improve the vertical resolution as in the field rate up conversion processing for the still picture, but does not produce the reversal phenomenon of the time axis.

Accordingly, in order to reduce the field flicker rationally, motion information of the image is detected from the broadcasted television signals, and the field rate up conversion processing are changed for the motion part and the still part, thereby the images suitable for the still picture and the motion picture can be obtained.

Summary of the Invention

In the above‑mentioned field rate up conversion processing, since processings for generating signals of the interpolation field are different in the still picture and the motion picture, the processing circuit cannot be commonly used. Therefore, field rate up conversion processing circuits of two systems must be previously prepared and be changed (the signal path be changed) in response to the motion information of the image. As a result, the circuit scale is increased.

Also in the above‑mentioned field rate up conversion processing, when the still domain and the motion domain exist in mixed state, since positions of the center of gravity are different in the still domain and the motion domain, if the field rate up conversion processings are changed in response to the motion information of the image, the image becomes unnatural at the boundary portion between the still domain and the motion domain.

An object of the present invention is to provide a signal processing circuit and method thereof, where a field rate up conversion processing circuit capable of being used commonly in the still picture and the motion picture, thereby the field rate up conversion processing of video signals with the motion domain and the still domain existing in mixed state can be carried out without increasing the circuit scale.

Another object of the present invention is to provide a signal processing circuit and method thereof, where the field rate up conversion processing can be carried out so that the image at the boundary portion between the still domain and the motion domain does not become unnatural.

The foregoing and other objects, advantages, manner of operation and novel features of the present invention will be understood from the following detailed description when read in connection with the accompanying drawings.

Brief Description of the Drawings

Fig. 1 is a block diagram showing constitution of an embodiment of a signal processing circuit of video signals according to the invention;

Fig. 2 is a diagram explaining an interpolation signal generating method for conversion from interlaced scanning signals to progressive scanning signals in the signal processing circuit shown in Fig. 1;

Fig. 3 is a diagram explaining outline of progressive scanning signals generated by the interpolation processing to interlaced scanning signals in the signal processing circuit shown in Fig. 1;

Fig. 4 is a diagram explaining algorithm of a field rate up conversion processing in the signal processing circuit shown in Fig. 1;

Fig. 5 is a diagram explaining principle of interlaced scanning in the prior art;

Fig. 6 is a diagram indicating vertical space positions of scanning signals in each field of interlaced scanning in the prior art;

Fig. 7 is a diagram showing general circuit constitution of a field rate up conversion processor in the prior art;

Fig. 8 is a diagram explaining algorithm of a field rate up conversion processing in still picture in the prior art; and

Fig. 9 is a diagram explaining algorithm of a field rate up conversion processing in motion picture in the prior art.

Description of the Preferred Embodiments

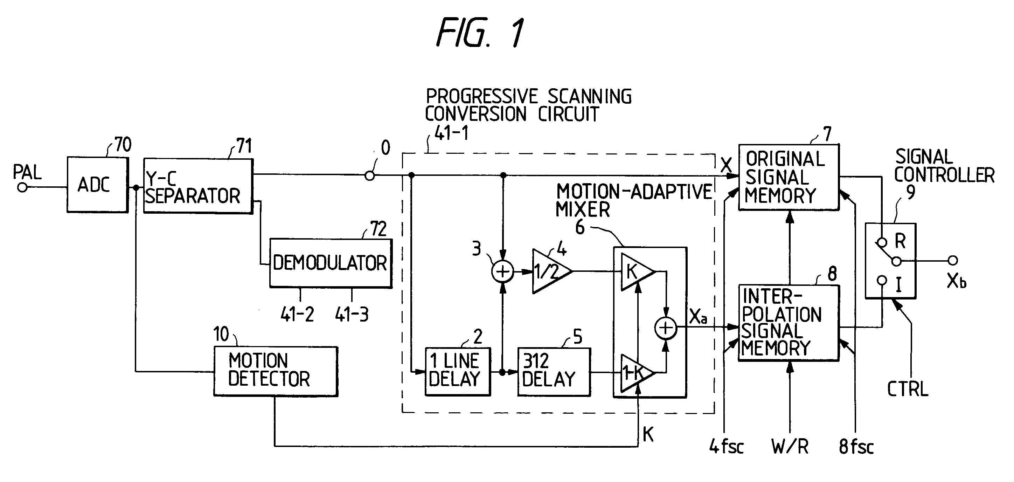

Embodiments of the present invention will be described using the accompanying drawings as follows. Fig. 1 is a block construction diagram of an embodiment of a signal processing circuit of video signals according to the present invention.

In Fig. 1, since a DAC (Digital − Analog Converter) 76 and a matrix circuit 77 from a field rate up conversion processor 73 forward among the signal processing circuit in the prior art shown in Fig. 7 are substantially the same, they shall be omitted.

Also in Fig. 1, only output from a Y − C separator 71 is inputted to a PSC (Progressive Scanning Conversion Circuit) 41 − 1, but output of a demodulator 72 is also inputted to PSC 41 − 2, 41 − 3 similar to 41 − 1, and respective outputs of the PSC 41 − 1, 41 − 2, 41 − 3 are temporarily recorded in memories 7 and 8.

In Fig. 1, symbol X designates a video signal which represents Y, u, v signals separated from composite television signals, and corresponds to interlaced scanning signals described in Fig. 5 and Fig. 6.

The progressive scanning conversion circuit 41 − 1 enclosed by broken line is a circuit for processing input scanning signals X applied to an input terminal 0 and generating progressive scanning signals. The progressive scanning signal is constituted by an original scanning signal X being input and an interpolation scanning signal Xa.

The original scanning signal X is constituted by an input signal being outputted intact, and the interpolation signal Xa is constituted by an interpolation signal XL according to intra − field processing and an interpolation signal Xf according to inter − field processing being mixed by a mixer 6. In order to generate the intra − field interpolation signal XL, since the input scanning signals X of the two continuous scanning lines are added and averaged, the X signals pass through a 1 − line delay circuit 2, and signals before and after the delay may be added in an adder 3 and multiplied by 1/2 in a coefficient circuit 4. On the other hand, in order to generate the inter − field interpolation signal Xf, since a signal coincident with the space position of the corresponding preceding field is utilized intact, the X signal passing through the 1 − line delay circuit 2 is further subjected to delay processing by 312 lines in a 312 − line delay circuit as shown in Fig. 1.

Interpolation scanning signal Xa is estimated in that the interpolation signal XL and the interpolation signal Xf estimated by the above − mentioned processing are mixed adaptively in the motion − adaptive mixer 6 by motion control coefficient k, and the mixing is carried out in relation of equation (3).

$$Xa = (1 - k) \cdot Xf + k \cdot XL \qquad (3)$$

where, $0 \leq k \leq 1$

In this case, k is motion control coefficient and in range of $0 \leq k \leq 1$. That is, k approaches 1 in the motion picture part of the image, and approaches 0 in the still picture part.

And then, the X signal and the Xa signal carry out writing to an original signal field memory 47 and an interpolation signal field memory 8 respectively. So to speak, the progressive scanning signals are stored dividing in the two field memories 7 and 8. Then the writing speed to respective field memories is carried out in the sampling speed of the input signal, for example, 4fsc (fsc is frequency of chrominance sub − carrier). Signals written in the field memories 7 and 8 are subjected to the time compression of the scanning time to 1/2 times, and are outputted in prescribed timing. Also the signal reading speed from the field memories 7 and 8 is carried out in two times of the writing state, that is, 8fsc, from relation of increasing the field number to two times. In addition, the writing and the reading to the field memories 7 and 8 are carried out by the field memory control signal (W/R).

Output signals of the original signal field memory 7 and the interpolation signal field memory 8 are inputted to R side and I side of input terminals of a signal controller 9. Here, a signal at R side or I side is selected by a signal selection control signal (CTRL) so that an output signal follows format of interlace, and a field rate up conversion output signal Xb is obtained.

In addition, since component signals comprise three signals Y, u, v, the above − mentioned field rate up conversion processings are provided in three systems.

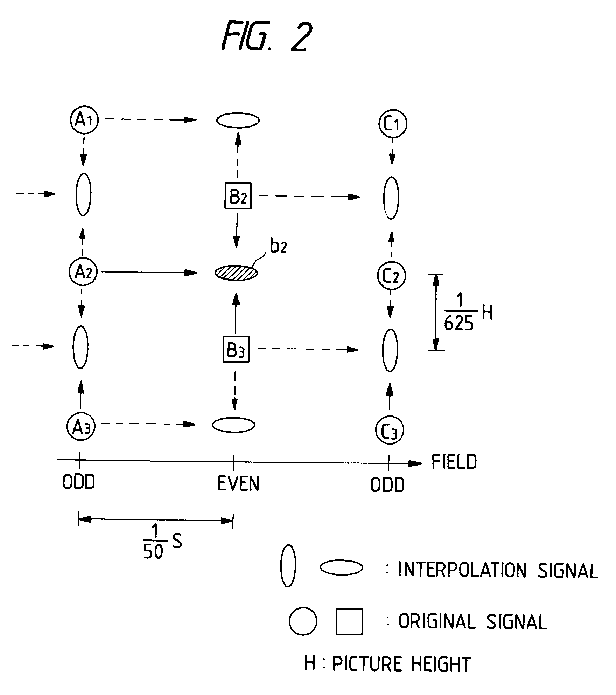

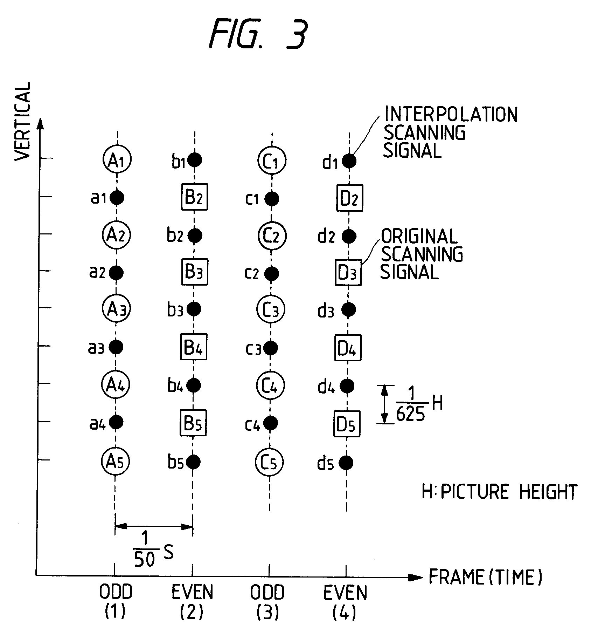

Processings of each part of the embodiment in Fig. 1 will be described further in detail in connection with the diagram indicating relation between the space position and the time position of scanning lines, referring to Fig. 2 and Fig. 3 as follows.

Fig. 2 is a diagram indicating position relation of time and space between interlaced scanning signals X and interpolation signals XL and Xf. Elliptic mark corresponds to interpolation scanning signal XL or Xf.

Now, estimating of an interpolation scanning signal b2 (shown by hatched line) positioned between scanning lines B2 and B3 of the original scanning signal X will be noticed. First, when the image is the still picture (k = 0), the scanning signal A2 of the preceding field corresponding to the same space position is used intact as an interpolation scanning signal by the inter − field interpolation scanning. That is, using the inter − field interpolation signal Xf delayed by 312 + 1 lines by the delay circuits 2 and 5, it follows that

$$b2 = A2 \qquad (4)$$

Next, when the image is the motion picture (k = 1), scanning signals just above (B2) and just below (B3) the interpolation scanning signal b2 to be estimated are added and averaged by the intra−field processing, and the resulting signal is used. That is, using the intra−field interpolation signal XL obtained by the delay circuit 2, the adder 3 and the coefficient circuit 4, it follows that

$$b2 = (B2 + B3)/2 \qquad (5)$$

The interpolation signal XL according to the intra−field processing and the interpolation signal Xf according to the inter−field processing are mixed by the motion−adaptive mixer 6 and converted into a motion−adaptive interpolation signal Xa.

Also the still domain and the motion domain exist in mixed state in the image, and in the interpolation signal b2 for the boundary portion, the interpolation scanning signal of the equation (4) and the interpolation scanning signal of the equation (5) are added with weighting by the motion information k respectively, and the resulting signal is used (motion adaptive interpolation). That is, it follows that

$$b2 = (1 − k) \cdot A2 + k \cdot (B2 + B3)/2 \qquad (6)$$

Thus if the interpolation scanning signal is generated adaptively by the motion information (k) of the image, the boundary portion between "still" and "motion" transfers stepwise and therefore natural variation is produced. Also when any other interpolation scanning signal is estimated, processing quite similar to equation (6) is carried out.

Fig. 3 is a diagram indicating position relation of time and space of the progressive scanning signal being output of the progressive scanning conversion circuit 41−1 in the embodiment of Fig. 1. Scanning signals indicated by circular frame and rectangular frame of solid line are original scanning signals X, and scanning signals indicated by black circle are interpolation scanning signals Xa. As shown in Fig. 3, interpolation scanning signals Xa at intermediate position (black circle) of interlaced scanning signals being inputted are estimated, and converted into video signals of progressive scanning. The signal scanning of the progressive scanning as shown in Fig. 3 is carried out, for example, in the order of A1→a1→A2→a2→A3→a3→A4→a4→A5→ in the odd (1) frame, and one frame is formed in scanning of one time.

Next, processing of converting the progressive scanning signals by the original scanning signals X and the interpolation scanning signals Xa shown in Fig. 3 into the field rate up conversion signals of the interlace 2 : 1 will be described. In the embodiment of Fig. 1, the original scanning signals X and the interpolation scanning signals Xa among the progressive scanning signals are stored respectively in separate field memories (the original signal field memory 7 and the interpolation signal field memory 8). For example, noticing the two continuous frames [odd (1), even (2)] among the progressive scanning signals of Fig. 3, signals A1→A2→A3→A4→ among the scanning signals to constitute the odd (1 frame are stored in the original signal field memory 7, and signals a1→a2→a3→a4→ are stored in the interpolation signal field memory 8. Also in the scanning signals to constitute the odd (2) frame, signals B2→B3→B4→B5→ are stored in the original signal field memory 7, and signals b1→b2→b3→b4→b5→ are stored in the interpolation signal field memory 8.

Next, processing of reading signals stored in the original signal field memory 7 and the interpolation signal field memory 8 will be described.

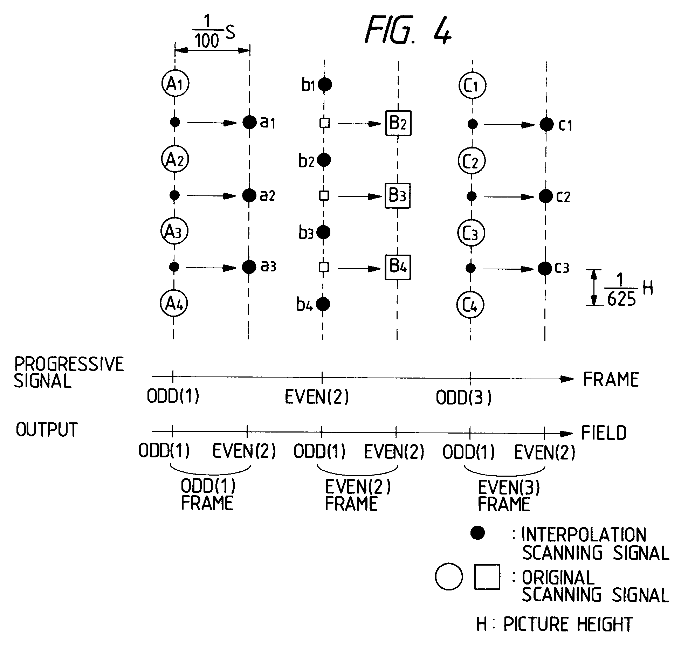

Fig. 4 is a diagram indicating algorithm of field rate up conversion processing according to the present invention.

Image output form in the case of the PAL television signal is in that since the field frequency is increased to 100 Hz, at the first period of 0.01 seconds, scanning signals of the original signal field memory 47 are 6utputted in the order of A1→A2→A3→A4→, and the odd (1) field of the odd (1) frame is constituted. At next period of 0.01 seconds, scanning signals of the interpolation signal field memory 48 are outputted in the order of a1→a2→a3→, and the even (2) field of the odd (1) frame is constituted.

On the other hand, when the even (2) frame of the progressive scanning signals is converted into the interlaced scanning signals subjected to the field rate up conversion processing, considering the signal scanning position of the preceding output field, in order to make the format of the continuous interlace, at the first period of 0.01 seconds, scanning signals of the interpolation signal field memory 8 are outputted in the order of b1→b2→b3→b4→, and the odd (1) field of the even (2) frame is constituted. At next period of 0.01 seconds, scanning signals of the original signal field memory 7 are outputted in the order of B2→B3→B4→,and the even (2) field of the even (2) frame is constituted. The above−mentioned signal processing is repeated similarly later, thereby the interlaced scanning signals subjected to the field rate up conversion processing are formed. That is, signals indicated by arrow among the progressive scanning signals are shifted in time and displayed in next field.

Summarizing operation of the processing circuit as above described, first, for the first original scanning signal corresponding to the odd field of video signals subjected to interlaced scanning field corresponding to the even field, the first interpolation scanning signal to compensate between the original scanning signals of each field are formed respectively. Next, the scanning times of the first and second original scanning signals and the interpolation scanning signal are compressed to 1/2. The output order of the scanning signals subjected to the time compression shall be a field constituted by the first original scanning signal, a field constituted by the first interpolation scanning signal, a field constituted by the second interpolation and a field constituted by the second original scanning signal, and this is repeated. The signal scanning speed in this case is displayed in two times of the input scanning speed.

Thus one frame of the progressive scanning signal is divided into 2 fields, and one field signal is shifted by prescribed time (0.01 seconds), and two field signals divided respectively are outputted at speed of two times of the input signal scanning speed (interlace display), thereby the field number is increased two times and therefore flicker of large picture plane is eliminated.

Although the present invention has been described in the embodiments, the present invention is not limited to the embodiments. For example, although the PAL signal has been described, the NTSC signal can be dealt with similarly by changing capacity the field memory.

Also, although the field memory is divided into the original signal field memory 7 and the interpolation signal field memory 8, the field memory may be constituted by single memory and an address control circuit is provided and operation may be carried out in substantially similar manner to the embodiment of Fig. 1.

According to the present invention, the progressive scanning signals with the doubled scanning line number to one frame (2 fields) of the inputted video signal are produced by the interpolation processing and stored in the memory, and the reading from the memory is carried out so that the original scanning line and the interpolation scanning line are interlaced and the field number is doubled, thereby the changing processing by providing circuits being different in processing algorithm need not be carried out and the apparatus can be simply constituted.

Also when the motion picture and the still picture exist in mixed state in the image, since the center of gravity of the image is not moved, the degradation of the picture quality in this point can be prevented.

## Claims

1. A video signal processing circuit where field rate up conversion processing of video signals with motion domain and still domain existing in mixed state can be made, said signal processing circuit comprising:

   a motion detector (10) for detecting motion of video signals from interlaced input scanning signals, and for generating motion control coefficient signals;

   a progressive scanning conversion circuit (41‐1) for generating progressive scanning video signals with original scanning signals and interpolation scanning signals being alternately inserted in line unit, from the input scanning signals and the motion control coefficient signals;

   memories (7, 8) for temporarily storing the progressive scanning video signals outputted from said progressive scanning conversion circuits and

   a control circuit (9) for selectively outputting original scanning signals or interpolation scanning signals to constitute the progressive scanning video signals outputted from said memories, at rate up speed with respect to line scanning speed of the input scanning signals and at rate up field period.

2. A video signal processing circuit according to claim 1, wherein said progressive scanning conversion circuit comprises an adding and averaging circuit (3) for adding and averaging signals of one line of continuous input scanning signals, delay circuits (2, 5) for outputting prescribed input scanning signals of the preceding field, and a motion‐adaptive mixer (6) for multiplying outputs of said adding and averaging circuit and outputs of said delay circuits by the motion control coefficient signals and for adding the multiplied results.

3. A video signal processing circuit according to claim 1, wherein said memories are constituted by an original signal memory (7) for temporarily storing original signals and an interpolation signal field memory for temporarily storing outputs of said motion‐adaptive circuit.

4. A video signal processing method where video signals with motion domain and still domain existing in mixed state are processed by field rate up conversion processing, said method comprising:

   step of generating interpolation scanning signals from interlaced scanning video signals;

step of generating progressive scanning signals with original scanning signals of the interlaced scanning video signals and the interpolation scanning signals being alternately inserted each other;

step of storing the progressive scanning signals in a memory;

step of selectively reading the original scanning signals and the interpolation scanning signals of the progressive scanning signals stored in said memory; and

step of alternately generating frames formed by interlaced scanning between original scanning signals and frames formed by interlaced scanning between interpolation scanning signals, in field period being 1/2 of the interlaced scanning video signals.

5. A video signal processing method according to claim 4, wherein the step of reading the scanning signals is processing of forming first field signals constituted by scanning signals of odd or even line of the progressive scanning signals and second field signals constituted by scanning signals of even or odd line, and of alternately generating interlaced scanning signals of the original scanning signals and the interlaced scanning of the interpolation scanning signals.

6. A video signal processing method according to claim 4, wherein in the step of generating the progressive scanning signals, the interpolation scanning signals are obtained in that outer interpolation signals by inter-field processing and inner interpolation signals by intra-field processing are estimated respectively, and the outer interpolation signals and the inner interpolation signals are added with weighting using the motion information of the image.

*FIG. 1*

PROGRESSIVE SCANNING CONVERSION CIRCUIT

EP 0 542 259 A1

# FIG. 2

A₁ - - - →  ⬭  C₁

↓  ↑  ↓

- - →  ⬮  B₂ - - →  ⬮

A₂ → → ▨ b₂  C₂

↓  ↑  ↑  ↓  $\frac{1}{625}$ H

- - →  ⬮  B₃ - - →  ⬮

↑  ↓  ↑

A₃ - - - →  ⬭  C₃

→ FIELD

ODD  EVEN  ODD

$\frac{1}{50}$ S

⬮ ⬭ : INTERPOLATION SIGNAL

◯ ☐ : ORIGINAL SIGNAL

H : PICTURE HEIGHT

# FIG. 3

VERTICAL

INTERPOLATION SCANNING SIGNAL

ORIGINAL SCANNING SIGNAL

$\frac{1}{625}$ H

H: PICTURE HEIGHT

$\frac{1}{50}$ S

| ODD (1) | EVEN (2) | ODD (3) | EVEN (4) |

FRAME (TIME)

FIG. 4

# FIG. 5 PRIOR ART

TV SCREEN

B₁
A₁
B₂ → SCANNING LINE (ODD FIELD)
A₂
B₃
A₃ --→ SCANNING LINE (EVEN FIELD)
B₄
A₄
B₅

VERTICAL

HORIZONTAL

# FIG. 6 PRIOR ART

VERTICAL

SCANNING SIGNAL

ODD     EVEN     ODD     EVEN     FIELD (TIME)

1 FRAME     1 FRAME

12

## FIG. 7 PRIOR ART

FIG. 8    PRIOR ART

ORIGINAL ────────────────────────────────► FIELD
         ODD        EVEN        ODD        EVEN

OUTPUT ──────────────────────────────────► FIELD
       ODD   EVEN   ODD   EVEN   ODD   EVEN   ODD
        └─────┘      └─────┘      └─────┘
          ODD          EVEN         ODD
         FRAME        FRAME        FRAME

○  □ : ORIGINAL SCANNING
        SIGNAL

⊗  ⊠ : OUTPUT SCANNING
        SIGNAL

H: PICTURE HEIGHT

EP 0 542 259 A1

# FIG. 9   PRIOR ART

ORIGINAL ───────────────────────────────────► FIELD

ODD          EVEN          ODD

OUTPUT ───────────────────────────────────► FIELD

ODD   EVEN   ODD   EVEN   ODD   EVEN

ODD FRAME     EVEN FRAME     ODD FRAME

○ □ : ORIGINAL SCANNING SIGNAL

⊗ ⊠ : OUTPUT SCANNING SIGNAL

H : PICTURE HEIGHT

EP 0 542 259 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | SYMPOSIUM RECORD,BROADCAST SESSIONS,MONTREUX(CH),13-06-91 'M.ACHIHA ET AL:"MOTION-ADAPTIVE ENHANCED DECODER AND UP-CONVERTER FOR PAL SIGNALS,P.197-208' * page 203 - page 205 * ----- | 1-6 | H04N5/44 |
| | | | TECHNICAL FIELDS SEARCHED (Int. Cl.5 ) |
| | | | H04N |

The present search report has been drawn up for all claims

| Place of search | Date of completion of the search | Examiner |
|---|---|---|
| THE HAGUE | 10 FEBRUARY 1993 | YVONNET J.W. |

EPO FORM 1503 03.82 (P0401)